Europäisches Patentamt

European Patent Office

Office européen des brevets

(19)

(11) Numéro de publication: **0 102 105**
**A2**

# (12) DEMANDE DE BREVET EUROPEEN

(21) Numéro de dépôt: 83201097.9

(22) Date de dépôt: 26.07.83

(51) Int. Cl.³: **G 01 F 11/02**

(30) Priorité: 03.08.82 CH 4677/82

(43) Date de publication de la demande:
07.03.84 Bulletin 84/10

(84) Etats contractants désignés:
AT BE DE FR GB IT LU NL SE

(71) Demandeur: GIDEC S.A.
Place Bel-Air, 6
CH-1260 Nyon(CH)

(72) Inventeur: Dietrich, Frédéric
Avenue du Château, 37
CH-1008 - Prilly(CH)

(72) Inventeur: Chavaillaz, Georges
Chemin de la Vogeaz, 15
CH-1110 - Morges(CH)

(74) Mandataire: Meylan, Robert Maurice et al,
c/o BUGNION S.A. 10, route de Florissant Case Postale
375
CH-1211 Genève 12 - Champel(CH)

(54) Installation de dosage volumétrique.

(57) Elle comprend un récipient de transition (1) alimenté par un réservoir contenant le liquide à doser relié par un orifice (7) du fond à une conduite de transfert (2) munie à son extrémité libre d'une soupape de surpression (3). Un vérin à double effet (5) commande un piston (6) qui se déplace de façon étanche dans le début de la conduite (2) pour extraire par surpression un volume déterminé du liquide contenu dans cette conduite (2).

EP 0 102 105 A2

Croydon Printing Company Ltd.

- 1 -

Installation de dosage volumétrique.

La présente invention concerne une installation de dosage volumétrique d'un liquide, notamment pour la fabrication d'un mélange composé d'un ou plusieurs composantsliquides.

Il est connu d'effectuer le dosage d'un mélange par pesage des différents composants ou par dosage volumétrique après que le spécialiste ait mis au point les proportions des composants sur un échantillon.

Pour des qualités relativement petites le dosage volumétrique est préférable car il est plus précis que le pesage des produits qui a l'avantage d'être plus rapide surtout lors de la fabrication d'un mélange en grande quantité. En effet, le débit d'un composant liquide en dosage volumétrique est limité d'abord par la grandeur du cylindre servant au dosage volumétrique et ensuite par le procédé, car on remplit d'abord à travers une vanne à trois voies le cylindre doseur et ensuite on expulse ce liquide par gravité ou par un piston dans un récipient de réception après avoir actionné la vanne à trois voies pour mettre en communication le cylindre doseur avec la conduite de transfert du composant. Par la suite la vanne à trois voies est actionnée encore une fois pour mettre en communication le cylindre doseur avec le récipient d'alimentation et le cycle recommence.

Malgré l'inconvénient du relativement petit débit du dosage volumétrique la précision qu'il assure est appréciée surtout lorsque la quantité du mélange désiré n'est pas grande par exemple lors de la préparation d'une couleur liquide dans un supermarché.

Le prix et les frais de maintien d'une installation de dosage volumétrique avec le cylindre volumétrique et la vanne à trois voies est relativement élevé car la vanne à trois voies est un élément coûteux et délicat.

La présente invention se propose de remédier au moins partiellement aux inconvénients susmentionnés en posant une installation de dosage volumétrique simple et peu coûteuse.

L'installation selon l'invention est caractérisée par le fait qu'elle comprend un récipient de transition alimenté par un réservoir contenant ledit liquide à doser, une conduite pour l'acheminement de liquide dans un récipient de réception reliée à un orifice du fond du récipient de transition et munie à son extrémité libre ou à un point intermédiaire d'une soupape de surpression, d'un vérin à double effet commandant un piston conçu pour être introduit par l'orifice du fond du récipient de transition dans le début de la conduite et y être déplacé de façon étanche afin d'extraire à travers ladite soupape un volume de liquide égal au volume dudit piston ou au volume de la portion de la conduite parcourue par le piston.

La simplicité de l'installation est évidente car elle comprend un récipient de transition, un piston commandé par un vérin à double effet et une conduite fermée par une soupape de surpression. Le seul élément relativement coûteux est la partie supérieure de la conduite qui doit collaborer avec le piston afin que ce dernier se déplace de façon étanche dans cette partie pour déplacer la colonne de liquide contenu dans la conduite et extraire un volume égal au volume du piston ou du volume de la portion de la conduite dans laquelle le piston s'est déplacé.

Selon une variante la course du piston est fixe et les différentes quantités volumétriques s'obtiennent en disposant de pistons de longueurs différentes.

Selon une autre variante c'est le réglage de la course du piston qui permet de choisir le dosage volumétrique. Bien entendu une combinaison de ces deux dernières variantes est possible permettant ainsi d'avoir un grand choix de quantités volumétriques différentes.

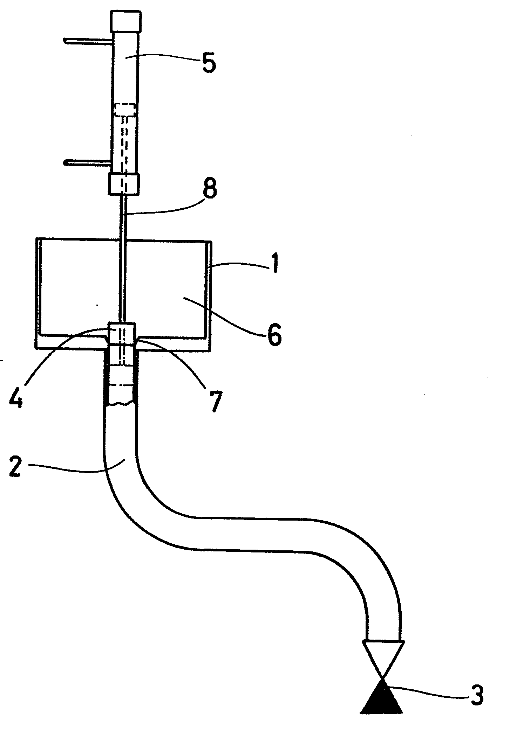

L'invention sera exposée plus en détail à l'aide de la figure unique annexée représentant une vue schématique d'une installation conforme à l'invention.

Un récipient de transition 1 communique par un orifice prévu à son fond avec une conduite 2 fermée à son extrémité par une soupape de surpression 3. Le récipient de transition 1 est alimenté, par gravité ou tout moyen connu, par un réservoir (non représenté). Il est de préférence fermé. Un piston 4 commandé par un vérin à double effet 5 est disposé perpendiculairement au fond du récipient 1 et face à l'orifice communiquant avec la conduite 2.

L'installation fonctionne de la manière suivante : le récipient 1 est alimenté en permanence de sorte que le niveau du liquide 6 reste approximativement constant. Au départ pour amorcer l'installation soit on ouvre la soupape de surpression 3 jusqu'à ce que le liquide 6 s'écoule à travers cette dernière, soit on relie la conduite 2 à une source de dépression (non représentée) pour créer le vide dans la conduite. Dans ce cas pendant la création du vide le piston est engagé dans la conduite 2 pour assurer l'étanchéité par rapport au récipient 1 et une fois le vide créé dans la conduite le piston recule pour laisser le liquide remplir la conduite 2. Pour le dosage volumétrique le piston descend dans la conduite 2 dont l'extrémité supérieure où l'orifice du fond présente une partie tronconique 7 pour guider le piston 4 lors de son introduction dans la conduite 2. Dès que l'extrémité inférieure du piston 4 quitte la partie tronconique 7 il commence à se déplacer de façon étanche dans la conduite et crée une surpression qui provoque l'ouverture de la soupape 3 et laisse s'écouler une quantité de liquide égale au volume de la conduite occupé ou parcouru par le piston 4. En effet il y a deux façons pour la quantité volumétrique du liquide expulsé : soit en fonction de la longueur de la course du piston dans la conduite (sans compter la partie tronconique 7), soit égale au volume du piston la course du piston dans la conduite 2 étant toujours la même. Autrement dit en conservant constante la longueur de la tige 8 du piston et de sa course et en utilisant des pistons 4 de longueurs différentes (la section transversale étant toujours la même) on obtient différentes quantités volumétriques.

Bien sûr on peut également régler la longueur de la course du piston en agissant par exemple par des butées fin de course sur la tige 8 du piston.

Après avoir expulsé la dose ou la partie de la dose requise le piston 4 recule pour laisser se remplir par gravité la conduite 2, la soupape de surpression 3 étant fermée dès que le piston 4 a cessé d'avancer et le cycle recommence pour compléter la dose ou pour une prochaine utilisation.

Cette installation simple permet d'une part un dosage volumétrique et d'autre part d'acheminer le liquide à des distances relativement éloignées du récipient de transition grâce à la surpression provoquée par le piston 4.

- 1 -

## Revendications

1. Installation de dosage volumétrique d'un liquide, notamment pour la fabrication d'un mélange composé d'un ou plusieurs composants liquides, caractérisée par le fait qu'elle comprend un récipient de transition alimenté par un réservoir contenant ledit liquide à doser, une conduite pour l'acheminement du liquide dans un récipient de réception reliée à un orifice du fond du récipient de transition et munie à son extrémité libre où un point intermédiaire d'une soupape de surpression, d'un vérin à double effet commandant un piston conçu pour être introduit par l'orifice du fond du récipient de transition dans le début de la conduite et y être déplacé de façon étanche afin d'extraire à travers ladite soupape un volume de liquide égal au volume dudit piston ou au volume de la portion de la conduite parcourue par le piston.

2. Installation selon la revendication 1, caractérisée par le fait que la course du piston est réglable en fonction du dosage requis.

3. Installation selon la revendication 1, caractérisée par le fait que la course du piston est fixe et la longueur du piston est fonction du dosage requis.

4. Installation selon la revendication 1, caractérisée par le fait que la course et la longueur du piston sont fonction du dosage requis.

5. Installation selon l'une des revendications précédentes, caractérisée par le fait que la conduite est reliée par l'intermédiaire d'une vanne à une source de dépression pour assurer l'armoçage de l'installation.

0102105